(19) Europäisches Patentamt
European Patent Office
Office européen des brevets

(11) **EP 2 791 713 B1**

(12) **EUROPEAN PATENT SPECIFICATION**

(45) Date of publication and mention
of the grant of the patent:
**23.05.2018 Bulletin 2018/21**

(21) Application number: **12812559.8**

(22) Date of filing: **14.12.2012**

(51) Int Cl.:
**G01V 11/00** [(2006.01)]

(86) International application number:
**PCT/EP2012/075635**

(87) International publication number:
**WO 2013/087881 (20.06.2013 Gazette 2013/25)**

(54) **ASEP+D METHOD: IDENTIFYING ANOMALOUS AREAS OF THE EARTH'S LOWER CRUST**

ASEP+D-VERFAHREN: IDENTIFIZIERUNG VON ABNORMALEN BEREICHEN DER UNTEREN ERDKRUSTE

PROCÉDÉ ASEP+D : IDENTIFICATION DE ZONES ANORMALES DE LA CROÛTE INFÉRIEURE TERRESTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2011 GB 201121603**

(43) Date of publication of application:
**22.10.2014 Bulletin 2014/43**

(73) Proprietor: **Statoil Petroleum AS
4035 Stavanger (NO)**

(72) Inventors:
• **WIENECKE, Susann
N-7540 Klaebu (NO)**
• **STADTLER, Christopher
N-4035 Stavanger (NO)**

(74) Representative: **Lind, Robert
Marks & Clerk LLP
Fletcher House
Heatley Road
The Oxford Science Park
Oxford OX4 4GE (GB)**

(56) References cited:
**WO-A2-2010/057783**

• **WIENECKE S ET AL:** "Reinterpretation of the Effective Elastic Thickness in Terms of Young's Modulus Variation Applying the Analytical Solution for an Elastic Plate (ASEP) to the Barents Sea", EOS, AMERICAN GEOPHYSICAL UNION, WASHINGTON, DC, US , vol. 87, no. 52 1 November 2006 (2006-11-01), pages 1-2, XP002617459, ISSN: 0096-3941 Retrieved from the Internet: URL:http://www.agu.org/meetings/fm06/waisf m06.html [retrieved on 2011-01-19]
• **WIENECKE, S.; BRAITENBERG, C.; GOTZE, H. J.:** "A new analytical solution estimating the flexural rigidity in the Central Andes", GEOPHYSICAL JOURNAL INTERNATIONAL, vol. 169, no. 3, 2007, pages 789-794, XP002695584, cited in the application
• **KIMBELL G S ET AL:** "Three-dimensional gravity and magnetic modelling of the Irish sector of the NE Atlantic margin", TECTONOPHYSICS, ELSEVIER, AMSTERDAM, NL, vol. 486, no. 1-4, 29 April 2010 (2010-04-29), pages 36-54, XP027012723, ISSN: 0040-1951 [retrieved on 2010-02-13]
• **PARKER R L:** "The Rapid Calculation of Potential Anomalies", GEOPHYSICAL JOURNAL OF THE ROYAL ASTRONOMICAL SOCIETY, BLACKWELL SCIENTIFIC PUBLICATIONS, LONDON, GB, vol. 31, 1 January 1972 (1972-01-01), pages 447-451, XP007921786, ISSN: 0016-8009

• GONCHAROV ET AL: "Intra-Crustal Seismic Isostasy in the Baltic Shield and Australian Precambrian Cratons from Deep Seismic Profiles and the Kola Superdeep Bore Hole Data", STRUCTURE AND EVOLUTION OF THE AUSTRALIAN CONTINENT : [PAPERS PRESENTED AT THE 1996 WESTERN PACIFIC GEOPHYSICS MEETING IN BRISBANE] / JEAN BRAUN ..., ED, WASHINGTON, DC : AMERICAN GEOPHYSICAL UNION, 1 , 23 July 1997 (1997-07-23), pages 119-137, XP008161366, DOI: 10.1002/9781118670095.CH9 ISBN: 978-0-87590-528-0 Retrieved from the Internet: URL:http://onlinelibrary.wiley.com/doi/10. 1002/9781118670095.ch9/summary [retrieved on 2013-03-17]

## Description

### Technical field

The present invention relates to a method of and apparatus for providing information on the structure of a region of the Earth. In particular, the present invention relates to a method of and apparatus for identifying anomalous areas of the Earth's crust.

### Background

In obtaining geological information about less explored areas of the Earth, it is desirable to obtain a wide-angle view of the Earth's features. For example, an entire sea or land mass may be examined for a large scale fault structure. Such a view may be a way of understanding how tectonic features interact on a larger scale or as a first step in screening the Earth for smaller areas of interest, to be further explored using conventional techniques such as seismic or drilling. One approach is to consider the flexural rigidity of the crust by observing and modelling the flexure of crustal plates and the presence of tectonic structures. Thin crustal plates can be considered to respond elastically, on a geological timescale, to gravitational and other large-scale forces. For example, the presence of a mountain on a crustal plate suggests that the plate is bending under the load of the mountain. The bending is resisted by the stiffness of the plate to reach an equilibrium point. This stiffness is described mathematically by flexural rigidity, denoted D, which is derived from the linear stiffness, termed Young's Modulus, denoted E. A Mohorovicic discontinuity (or Moho) is the boundary between the Earth's crust (both oceanic and continental) and the upper mantle. The Moho's position will depend on the isostatic balance of the topographic external load which causes the plate to bend, the internal load variations of the plate, the stiffness (flexural rigidity) of the plate and the restoring force of the mantle. A known technique for modelling this response is the Analytical Solution of an Elastic Plate (ASEP) (Wienecke 2006).

Under the ASEP technique, a region to be studied is modelled with a grid of discrete nodes and the positions of these nodes are calculated from the balance of forces on them. Typically, satellite derived topographical or bathymetric (seafloor depth measurements) data of the region provide information about the height of geological features which, when combined with density values for the various rock and sediment, are used to calculate the load on each grid node. A constant Young's modulus is assumed and this is converted to a flexural rigidity value for the plate. The balance of the loads and flexural rigidity determine the curvature of the plate. The plate interaction with the mantle underneath at a Moho is called a flexural Moho.

Typically, the Young's modulus, and thus rigidity, will not be known accurately. It is, however, possible to choose a sensible range of rigidity values, calculate corresponding flexural Mohos and compare them to a reference Moho to find the best fit. The flexural rigidity values providing the best fit are used in the model.

WO2010/057783 is related to and builds on the ASEP technique, disclosing as it does a method of processing measured data to provide information on the structure of a region of the earth, comprising providing a flexural rigidity distribution of the region, providing a Young's modulus distribution of the region, and modifying the flexural rigidity distribution with the Young's modulus distribution to obtain an equivalent elastic thickness distribution of the region indicative of the structure thereof. WO2010/057783 discloses that the Young's modulus distribution may be a distribution of Young's modulus variation, and the equivalent elastic thickness $T_{ee}$ may be obtained as a function of flexural rigidity D divided by effective Young's modulus $E_{eff}$. The flexural rigidity distribution may be obtained by fitting flexural Mohos to a reference Moho and selecting a best fit. The reference Moho may be obtained from at least one of temperature isotherm data, seismic or seismological data and gravity data. Each flexural Moho may be obtained from topological or bathymetric measurements and load. The load may comprise sedimentary load. Further detail on this technique, referred to herein as the ASEP+ or the ASEP+E technique, can be found in WO2010/057783.

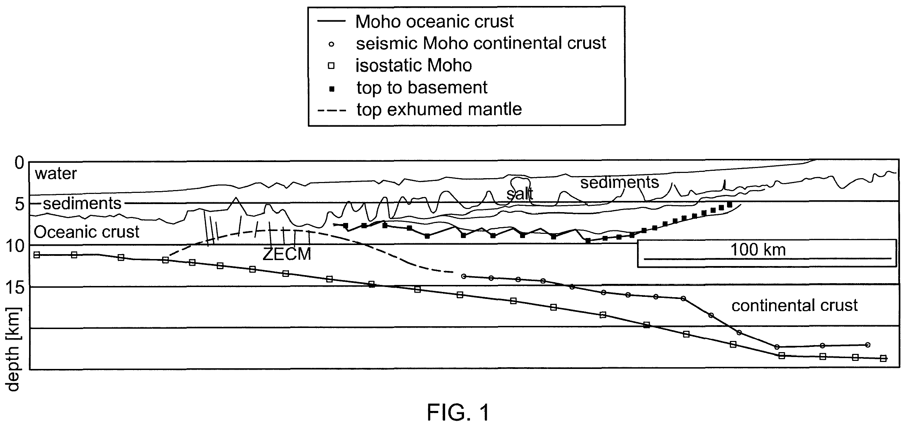

Figure 1 of the accompanying drawings illustrates a search for the best Moho model describing the transition between the lower crust and upper mantle along the ocean-continent boundary of a passive margin. The crustal model is interpreted (as common) from seismic reflectors along an acquired seismic profile. Figure 1 illustrates a crustal model after a structural geological model (e.g. Norton et al. 2009), in which a zone of exhumed continental mantle (ZECM) is located beneath the continent-ocean transition zone. The seismic interpreted oceanic Moho (black straight line in Figure 1) is much deeper than the seismic continental Moho (black dotted line in Figure 1) which is interpreted from seismic reflectors (grey lines of seismic image in the background), and it remains difficult to join them straightforwardly. Figure 1 also illustrates an alternative Moho interpretation (black squares, grey line) which is calculated with the ASEP+ method. This isostatic Moho is located much deeper in the ocean- continent transition zone, but agrees on the oceanic side and continental side (further land inwards) with the seismic interpreted Moho. Furthermore, the ASEP+ calculated Moho connects (joins) the seismic interpreted oceanic and continental Moho and explains the ZECM as a lower crustal body.

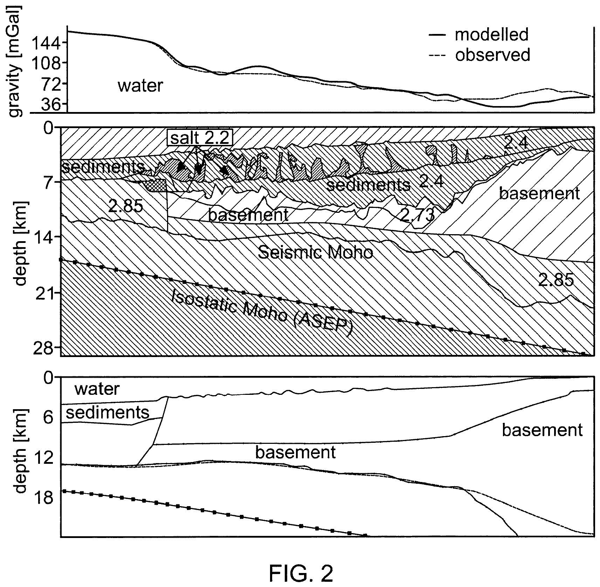

The upper and middle parts of Figure 2 of the accompanying drawings show a cross-section of a 3D model established on key surfaces from seismic interpretations along seismic profile 2400 in the South Atlantic, shown in the lower part. The seismic Moho geometry is interpreted from observed seismic reflectors and indicated by a white dotted line (circles) shown in Figure 2 in the crossection above and the seismic profile below . The seismic obtained Moho geometry mirrors the basement topography (indicated by black dots in Figure 2, the basement in grey is located below the sediments in light grey) Therefore from the isostatic view point it is questionable whether the seismic obtained Moho would correspond to a Paleo-Moho under the assumption that the basement topography corresponds to the Paleo topography. The seismic Moho shows high undulations in depth, that from the isostatic viewpoint are very unlikely for a crustal plate with strength. In addition to this argument, it is observed that the isostatic ASEP Moho explains the gravity signal observed today. The isostatic boundary corresponds to the steady state. The flexure Moho is proposed to be located much deeper. Thus leads to a higher crustal thickness. The crustal model using the isostatic Moho is the simplest model explaining the gravity signal observation in the long wavelength domain.

It is desirable to extend the application of the ASEP-related techniques to provide further information on the structure of a region of the Earth, and in particular the applicant has understood the desirability of being able to identify anomalous areas of the lower crust.

## Summary

According to a first aspect of the present invention, there is provided a method for use in identifying anomalous areas of the lower crust of a region of the earth, comprising providing information relating to the geometry of the Moho for the region, the Moho representing a transition between the upper mantle and the lower crust for the region, determining the geometry of an intra-crustal layer for the region, the intra-crustal layer representing a transition between the lower crust and the middle or upper crust for the region, using observed gravity data to determine a density distribution between the intra-crustal layer and the Moho, and comparing the determined density distribution to a reference density distribution or reference density value for the lower crust, the comparison enabling the identification of anomalous areas of the lower crust for the region.

The method may comprise determining the geometry of the intra-crustal layer from the geometry of the Moho.

The method may comprise determining the depth of the intra-crustal layer based on the depth of the Moho, for example as a predetermined fraction of the depth of the Moho.

The method may comprise determining the depth of the intra-crustal layer as being between 0.57 and 0.77 of the depth of the Moho, for example two thirds of the depth of the Moho.

Any kind of intra crustal layer may be used, for example based on a seismological model (Conrad discontinuity) or related to a layer of a density contrast. Another possibility for calculating the isostatic ICL makes use of the knowledge that the ICL corresponds to a Paleo Moho in the case of serpentinized mantle. Then the isostatic ICL can be calculated from the Paleo topography or the depth to top basement with the ASEP+ application.

The method may comprise determining first and second geometries for the intra-crustal layer, and determining the density distribution using the first and second geometries for the intra-crustal layer.

The method may comprise determining first and second density distributions between the intra-crustal layer and the Moho relating respectively to the first and second geometries for the intra-crustal layer, combining the first and second density distributions to form a combined density distribution, and using the combined density distribution in the comparing step. The first geometry may represent a seismic interpreted intra-crustal layer (e.g. from earth reference model), and the second geometry may represent an isostatic interpreted intra-crustal layer (e.g. determined based results of the ASEP method).

The method may comprise determining the geometry of the Moho using a method as disclosed and claimed in WO2010/057783.

The step of using the observed gravity data to determine the density distribution may comprise performing a gravity inversion.

The reference density distribution or reference density value for the lower crust may be obtained from a reference earth model.

The comparing step may comprise comparing the determined density distribution to an average density value for the lower crust obtained from the reference earth model.

The step of comparing the determined density distribution to the average density value may comprise dividing the determined density distribution by the average density value to obtain a normalised density distribution, and comparing the normalised density distribution with a reference density value of 1.

The method may comprise identifying an area of the lower crust as anomalous if the determined density distribution is greater than the reference density distribution or reference density value for the lower crust, or at least greater than a threshold which is itself higher than the reference density distribution or reference density value.

The method may comprise determining a degree of anomalousness based on the determined density distribution, for example based on the comparison between the determined density distribution and the reference density distribution or reference density value.

According to a second aspect of the present invention, there is provided a method of assessing the likelihood of or potential for oil and/or gas fields, particularly giant oil and/or gas fields, in a region of the earth, comprising performing a method according to the first aspect of the present invention, or at least using the result of a method according to the first aspect of the present invention, for example using the determined density distribution or the output of the comparing step or the determined degree of anomalousness mentioned above.

According to a third aspect of the present invention, there is provided a method of performing oil and/or gas field operations as a result of the performance of a method according to the first or second aspect of the present invention.

According to a fourth aspect of the present invention there is provided a method of identifying anomalous areas of the lower crust of a region of the earth, comprising receiving a density distribution determined according to a method of the first aspect, comparing the received density distribution to a reference density distribution or reference density value for the lower crust, and identifying anomalous areas of the lower crust for the region based on the comparison.

According to a fifth aspect of the present invention, there is provided an apparatus for use in identifying anomalous areas of the lower crust of a region of the earth, comprising means (or a portion or processor or module) for providing information relating to the geometry of the Moho for the region, the Moho representing a transition between the upper mantle and the lower crust for the region, means (or a portion or processor or module) for determining the geometry of an intra-crustal layer for the region, the intra-crustal layer representing a transition between the lower crust and the middle or upper crust for the region, means (or a portion or processor or module) for using observed gravity data to determine a density distribution between the intra-crustal layer and the Moho, and means (or a portion or processor or module) for comparing the determined density distribution to a reference density distribution or reference density value for the lower crust, the comparison enabling the identification of anomalous areas of the lower crust for the region.

According to a sixth aspect of the present invention, there is provided an apparatus comprising means for performing a method according to any one of the first to fourth and tenth aspects.

According to a seventh aspect of the present invention, there is provided a program for controlling an apparatus to perform a method according to the first, second, third, fourth or tenth aspect of the present invention or which, when loaded into an apparatus, causes the apparatus to become an apparatus according to the fifth or sixth aspect of the present invention. The program may be carried on a carrier medium. The carrier medium may be a storage medium. The carrier medium may be a transmission medium.

According to an eighth aspect of the present invention, there is provided an apparatus programmed by a program according to the seventh aspect of the present invention.

According to a ninth aspect of the present invention, there is provided a storage medium containing a program according to the seventh aspect of the present invention.

According to a tenth aspect of the present invention, there is provided a method for use in identifying anomalous areas of the lower crust of a region of the earth, comprising performing only those steps according to a method of the first aspect that are actually required to determine the density distribution, the density distribution being for subsequent comparison in a separate method with a reference density distribution or reference density value for the lower crust, such that anomalous areas of the lower crust for the region can be identified based on the comparison.

An embodiment of the present application relates particularly to the mapping of anomalous areas of the crust correlating with the tectonic settings of sedimentary basins containing giant hydrocarbon fields.

## Brief description of the drawings

Figure 1, discussed hereinbefore, illustrates a search for the best Moho model describing the transition between the lower crust and upper mantle;

Figure 2, also discussed hereinbefore, illustrates seismic and isostatic Moho;

Figure 3, also discussed hereinbefore, illustrates volcanic and non-volcanic passive margins;

Figure 4 illustrates anomalous areas of the crust located in the continent-ocean transition zone along the passive margin;

Figure 5 is a flow diagram of a method according to an embodiment of the present invention;

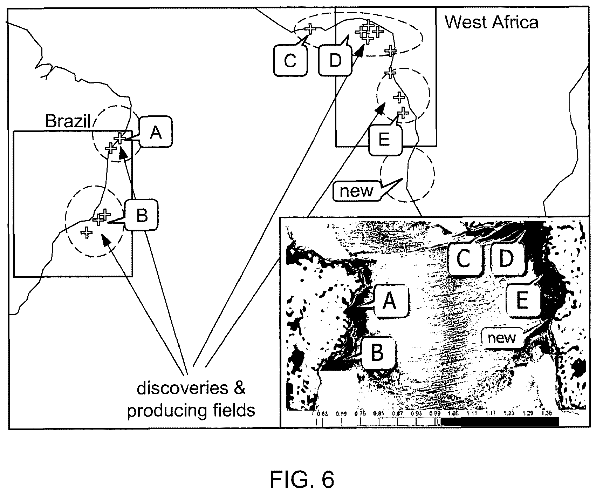

Figure 6 is a map of giant discoveries and produced fields (white crosses) overlaid with a NDF distribution obtained using an embodiment of the present invention;

Figure 7 is a map of giant discoveries and produced fields (crosses, and box) with schematic sketch of NDF distribution plotted on bathymetry;

Figure 8 is a schematic flow chart illustrating a method according to an embodiment of the present invention; and

Figure 9 is a schematic block diagram illustrating an apparatus according to an embodiment of the present invention.

**Detailed description**

The Mohorovičić discontinuity, named after Andrija Mohorovičić and referred to as the Moho, is the boundary between the Earth's crust and the mantle. The Moho separates both oceanic crust and continental crust from underlying mantle. Primary seismic waves (p-waves) passing through the Moho change their velocity by approximately 1 km/s, (from 7 up to 8 km/s) with the higher velocity occurring in the mantle and the lower in the crust. Therefore the Moho can be detected by a significant velocity change and often interpreted from a seismic reflector seen in a seismic section. It has in the past been postulated that the Moho is best described as a metamorphic transition zone and the different nature of the Moho is discussed (e.g. Meissner 1973).

The Conrad discontinuity, named after Victor Conrad, is not as pronounced as the Mohorovičić discontinuity, and absent in some continental regions. Up to the middle 20th Century the upper crust in continental regions was seen to consist of felsic rocks such as granite (silica-aluminium = SiAL), and the lower one to consist of more magnesium-rich mafic rocks like basalt (silica-magnesium = SiMA). Therefore, in the past it was considered that the Conrad discontinuity should correspond to a sharply defined contact between the chemically distinct two layers, SiAl and SiMa related to the border between upper and lower continental crust. However, from the 1960s onward this theory was strongly contested among geologists. The exact geological significance of the Conrad discontinuity is still not clarified and it is believed that the partial melting zones that are scattered in the continental crust might provide an explanation.

The CRUST 2.0 model is a global model for the Earth's crust based on seismic refraction data. It is specified on a 2x2 degree grid and takes advantage of a compilation of global sediment thickness and ice thickness. The global model is defined by seven layers with ice, water, soft sediments, hard sediments, upper crust, middle crust and lower crust. The parameters primary and secondary seismic velocities (Vp, Vs) and densities (rho) are given explicitly for these seven layers as well as the mantle below the Moho. The following provides information relating to the main three crustal layers, and the underlying mantle:

|  | Rho [kg/m$^3$] | Vp [km/s] | Vs [km/s] |
|---|---|---|---|
| upper crust | 2600 | 5.0 | 2.50 |
| middle crust | 2900 | 6.6 | 3.65 |
| lower crust | 3050 | 7.1 | 3.90 |
| mantle | 3350 | 8.1 | 4.65 |

Often a more simplified model is used similar to the Reference Earth Model in the Gravity community, which divides the crust into upper crust and lower crust, omitting the middle crust. Each feature is described by an average density value. The main bodies in such a simplified crustal model are: sediments 2300 kg/m$^3$, upper crust 2600 kg/m$^3$, lower crust 2900 kg/m$^3$ and mantle 3350 kg/m$^3$.

The oceanic crust differs from continental crust. The oceanic crust is 5 km to 10 km thick and is composed primarily of basalt, diabase, and gabbro. The continental crust is typically from 30 km to 50 km thick, and is mostly composed of slightly less dense rocks such as granites, which are rare to absent in the oceanic crust.

Hydrocarbons are not believed to occur on oceanic crust and therefore it is of value in hydrocarbon exploration to know where the oceanic crust ends and the continental crust begins.

At active margins (subduction zone) it is relatively easy to model the subducted oceanic crustal plate which stops at the trench. At passive margins it is not easy, because it is often not a boundary describable with a sharp line (OCB=ocean continent boundary), but more a transition zone from oceanic crust to continental crust (OCT=ocean continent transition).

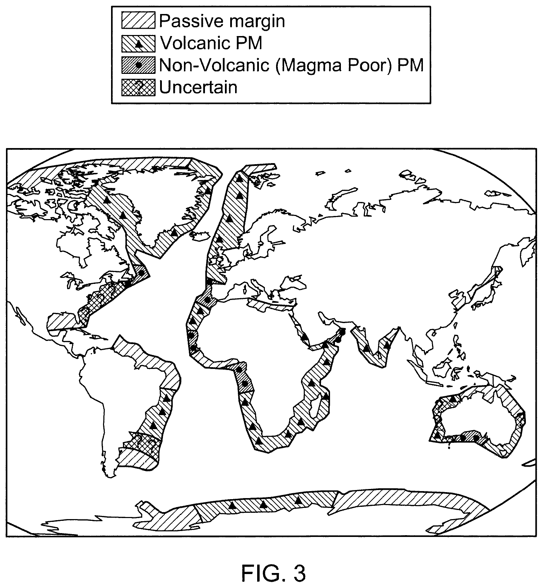

The passive margins are not homogeneous and can be divided into segments. Some segments are described as volcanic margin type and other segments as magma poor margins. Figure 3 illustrates volcanic and non-volcanic margins after Melluso et al 2002, Geoffroy 2005, Watkeys 2002 and Leroy 2008 (figure source: D. Pinto and T. Patel 2007). Non volcanic margin is nowadays called magma-poor margin. In many places it still remains uncertain if a volcanic or magma poor margin is present.

The difference between volcanic margins and magma-poor margins is that magma-poor margins do not contain large amounts of extrusives and/or intrusive rocks and may exhibit crustal features such as unroofed, serpentinized mantle. A Moho is typically either not observed, or the Moho reflection is weak or absent in seismic traces. Moho which is coincident with the isostatic boundary would be much deeper >8km. It is therefore expected that the seismic interpreted Moho would differ from the isostatic observed Moho.

The other type, volcanic margin, is characterized by the presence of a lower crust with anomalously high seismic p-wave velocities (7.1 to 7.8 km/s), and referred to herein as lower crustal bodies (LCBs). LCBs are often located in continent-ocean transition and in some cases they even extend beneath the continental crust. There is significant interest from a geo-scientific point of view as to their real nature, geodynamic and petroleum implications.

The present applicant has appreciated that these LCBs should be detectable with isostatic methods, and further that these would be expressed by relatively high densities located in the lower crust. However, there is no known method to identify such anomalous features.

P. Mann et al (2006) proposed that almost all of the world's 932 discovered giant oil and gas fields cluster within 27 regions and analyzed the tectonic setting of these sedimentary basin containing giants. (Giant oil and gas fields are considered those with 500 million barrels of ultimately recoverable oil or gas equivalent; it is believed these giants account for 40 percent of the world's petroleum reserves.) They found that basins fronting continental passive margins account for 31% of giants. Continental rifts and overlying sag basins form the basin type that contains 30% of the world's giant oil fields. Terminal collision belts between two continents form a major basin type that contains 24% of the world's oil giants. Arc-continent collision margins, strike-slip margins and subduction margins comprise the setting for 15% of the world's giant fields.

Conclusively, more than a third of basin types that contain giants are located at passive margins.

However a link between the tectonic setting of these sedimentary basins with the geophysical observation is neither known, nor published. Also there is no method known for establishing such a link or using it in order to map other areas with similar tectonic settings. The present applicant has appreciated that this could be used to predict and screen for possible basins containing giants.

The existing technology for global screening and frontier exploration does not provide a common method that clearly allows describing and defining the OCT and their segmentation which shows a correlation of the tectonic settings of the basins containing giants.

With the existing technology there is a problem to constrain the Moho or crustal thickness.

It has been found that seismic observations suggest a boundary other than the Moho, which is interpreted as the Moho, but which would correspond to an intra-crustal layer (ICL) according to the observed velocity increase (7.1km/s observed, Moho would be a jump up to 8.1km/s). An intra-crustal layer can be considered to represent a transition between the lower crust and the middle or upper crust.

Martinez-Martinez et al. (1998) suggested a mechanism of intra-crustal isostatic compensation at a prominent mid-crustal reflector (MCR) which is deemed to represent a decoupling zone between the upper and the deep crust of the Sierra Nevada core, Spain. However it was only a suggestion of a mechanism, but there was no computation algorithm proposed which would allow one to calculate analytically the isostatic ICL.

There is no consistent model in existence of a Moho and lower crustal architecture explaining all observations from gravity, seismic and isostasy. The Moho calculated with ASEP differs from the seismic interpreted Moho, while the ASEP Moho can explain the gravity field observations, the seismic Moho can not.

The correct crustal thickness and Moho geometry are of importance to know for at least some of the following reasons:

(a) for calculations of palaeo-water depth, subsidence history and beta stretching factors
(b) temperature modelling
(c) performing sediment back stripping with flexural models
(d) for GravMag modelling and seismic imaging to estimate the basement depth

These are important input information for reservoir modelling, yet to find estimates, and STOIIP calculations.

Seismic interpreters define a Moho by visual inspection of seismic sections and by assigning the Moho to a distinct reflector of the section, which is strongly biased by the interpreter's experience, knowledge and intuition. The interpretation can be ambiguous, especially in complex geological settings like passive margins, because of a variety of reflectors in different depths because of bad seismic image quality particularly in greater depth.

Often a reflector related to an increase from 6.9 to 7.4 km/s is interpreted as Moho, but could correspond to the upper boundary of a metamorphic body like an exhumed serpentinized mantle feature. It can happen that an ICL is interpreted as a Moho reflection, because of seismic velocity contrasts similar to the Moho. This results in too shallow Moho depths, and consequently this results in misleading geological models describing the crustal architecture of the OCT (see Figure 1, which is an example of a misinterpretation Moho around Angola).

Up till now, the isostatic Moho model is neglected and only the seismic Moho model is considered. But this leads to incorrect models concerning the temperature, beta stretching factures, subsidence history and so on.

Gravity and magnetic modelling allows minimum and maximum estimation of crustal thicknesses using gravity data. In the modelling, a density structure of the crust is created. The model is then adjusted until the model response is fitting to the observed gravity field.

However, sometimes remains a misfit and because of the inherent ambiguity of potential field modelling, it can be a problem to distinguish as to whether it is caused by shallow crustal source and a deeper crustal source.

Long wavelength signals can be caused by deep sources (like Moho geometry, lower crustal bodies) and shallow sources (like long stretched sedimentary basin, smooth variations in mother salt thickness). The high degree of freedom does not allow the source location for the misfit to be clearly defined. It is up to the interpreter's decision and the available constraints to explain the model misfit. Generally, long wavelength misfit is explained by a change of Moho geometry, heterogeneous basement type or changes in the sedimentary part of the model.

One potential problem with this approach is that a mass source sitting in the lower crust could also produce a long wave length signal.

In addition, a geometry change of the crust-mantle boundary (in order to fit the gravity observation) is inconclusive and ambiguous. A problem can be that the final model depends on the model builder and this introduces often inconsistency to isostasy.

That is why the modelling can be constrained by combination with the flexure Moho calculated with ASEP+, which reduces the number of uncertainties in gravity modelling. The gravity signal of the flexure Moho is reflecting the long wavelength component of the gravity field. This often results in a sufficiently good model fit for the long wavelengths after including the flexure Moho in the model.

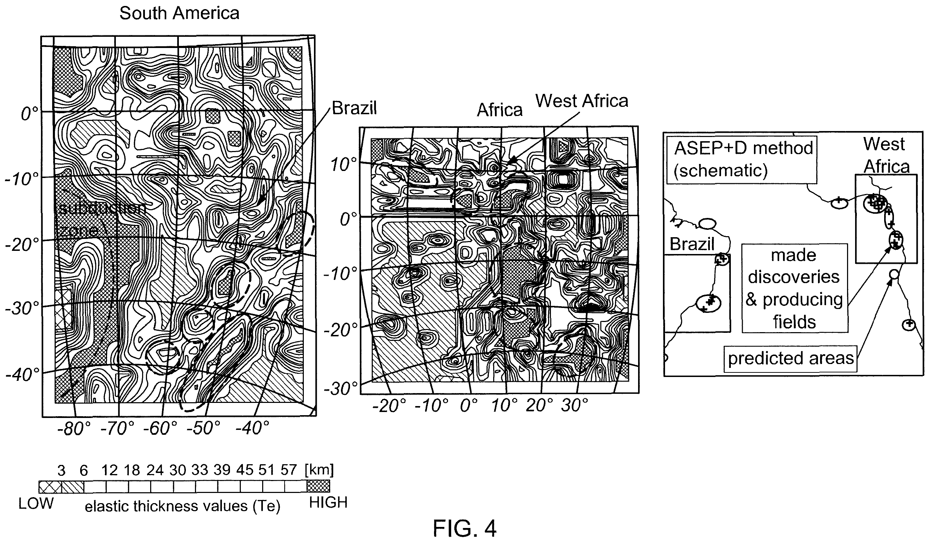

The elastic thickness of the South American and African crustal plate has been calculated by the present applicant using the ASEP method. A segmentation of the SAM passive margins was found, expressed by high rigidity values within the OCT zone (dark grey and black colour, dotted circles, on the left side and middle of Figure 4). However, with this technique high rigidity values are observed overall. It was not possible to distinguish, what is related to the high rigidity of the crust and what is related due to the misinterpretation of the Moho interpreted from seismic reflectors.

Also the seismological Crust 2.0 model without the constraint of gravity observation shows no correlation with tectonic settings of sedimentary basins containing giants. This new combination with the isostasy is needed.

As mentioned previously, the passive margins are not homogeneous and can be divided into segments. Some segments are described as volcanic margin type and other segments as magma poor margins (Figure 3). Both margin types have different implications on the hydrocarbon system.

A problem with this technology is to establish a tectonic model distinguishing between volcanic and magma-poor margin type and showing a direct correlation to the tectonic settings of the basins containing giants.

On the one hand, features of the exhumed mantle are expected beneath magma-poor margins, and on the other hand LCBs of high seismic velocities are predicted at volcanic margins.

The outcome of both passive margin models is a predicted lower crustal body of high density and it remains difficult to distinguish between them. Also, it is expected that the seismic interpreted Moho would differ from the isostatic observed Moho. The consequence is an erroneous interpretation as to whether or not the feature would belong to lower crust or upper mantle.

To overcome this, in an embodiment of the present invention, the intra-crustal layer is considered in order to investigate the tectonic settings. An isostatic ICL is calculated and compared with the seismological obtained ICL and Moho. A novel method has been developed whereby anomalous parts of the lower crust are expressed by anomalous densities D compared to the normal reference average density of the lower crust (e.g. 2900 or 3100 $kg/m^3$ in dependence which reference model is used, i.e. two or three layered crust). The novel method is referred to herein as ASEP+D.

Such a method has not been previously proposed. It has been found that the ASEP+D method is able to explain the misfit of the crustal model to the observation.

In this regard, the observation is the long wave-length gravity signal. The crustal model consists of crustal layers with defined geometry and density values (e.g. sediments, top to basement, middle crust, lower crust, Moho). The misfit is obtained between the gravity calculated of the model compared to the measured/obtained gravity signal.

These areas of misfit are areas of interest due to the correlation with the tectonic setting of the basins, where known discoveries have been made and produced fields are located.

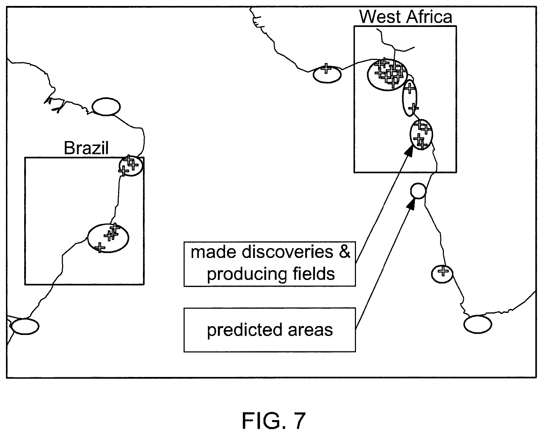

Referring back to Figure 4, the areas of high rigidity values within the OCT zone from the ASEP method (dark grey and black colour, dotted circles, on the left side and middle of Figure 4) are actually identical with some of the areas mapped with the ASEP+D method according to an embodiment of the present invention (black circles on the right side of Figure 4, showing areas of high NDF as will be explained further below) correlating with tectonic settings of sedimentary basins where discoveries were made and produced fields are located (white crosses). This is discussed again below with reference to Figure 7.

The main three layers of the Earth's crust, having different material and rock compositions, are the upper, middle and lower crust (description of reference earth model, e.g. from seismology Laske et al. 2000). Between the upper and middle crust, as well as between the middle and lower crust is a feature considered to be of significance by the present applicant, referred to herein as an intra-crustal layer (short: ICL).

The first seismological obtained ICL, is related to a p-wave velocity increase from 5.0 to 6.6 km/s and corresponds to a density contrast 2600 to 2900 kg/m$^3$. This layer is related to between 2.6 and 2.9 and the gravity reference model where also 2600 for upper crust and 2900 for lower crust.

The second ICL is observed with deep seismic as p-wave velocity increase from 6.6 to 7.1 km/s and corresponds to a density contrast 2900 to 3050 kg/m$^3$ (e.g. from seismological CRUST 2.0 model). The ICL can be considered to be associated closely with the Conrad discontinuity.

The method works for both seismological ICLs. It does not matter which of this ICL is chosen, the location and position of the anomalous areas does not change.

The flexure Moho (from ASEP+) is a first order model which already fits the observation of the gravity anomaly in the long wave length to a certain degree. If this is the case, then there can be considered to be a "normal" crust type. If in certain areas there is still a misfit between the modelled and observed gravity signal in the long- and intermediate wave length part, then there can be considered to be an "anomalous" crust type.

With the new method it is possible to fix the CMI geometry independent from the gravity field observation by the load and isostasy, which reduces the degree of freedom in the modelling.

The advantage of calculating the Moho with the ASEP+ is that all load variations are included. If the missing mass would be located in the upper crustal part, then a different geometry (Moho depth values) would be calculated. Furthermore, it was shown that ASEP+ is a precise method, which is robust and not very sensitive to errors in sediment thickness estimates. For example, an 8km uncertainty in basement depth estimates leads only to a 440m uncertainty in Moho depths. That is why this can be used as an additional constraint to the model.

The ASEP+D method is able to map anomalous parts of the crusts, for example as expressed by a normalized density factor distribution.

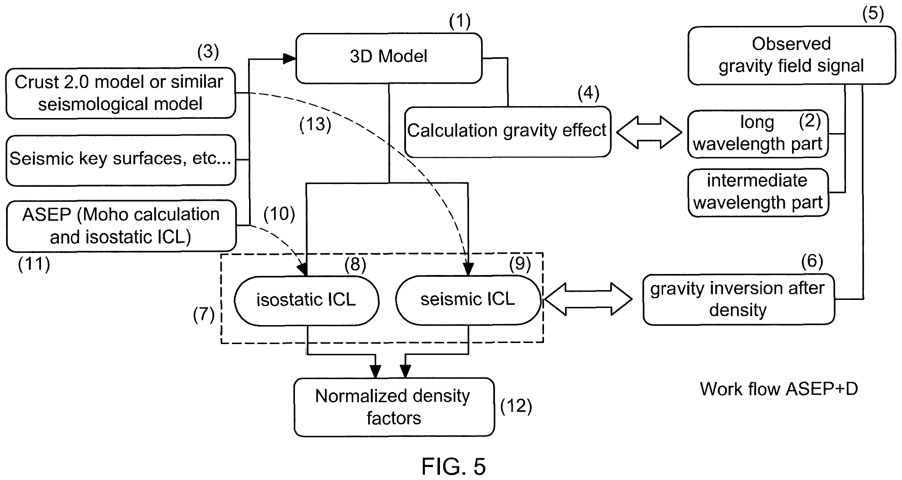

Steps of calculation according to a method embodying the present invention are described in more detail below with reference to the work flow diagram of Figure 5.

A 3D model of density variation is provided (1) which already fits to a certain degree the long wave length part of the observed gravity signal (2) (Free Air, or Bouguer anomaly) in a gravity modelling software (e.g. from Geosoft with GMSyS3D).

The GMSYS-3D software package can be used to build a model constrained with the geometry e.g. from the Crust 2.0 model (3) and calculate the gravity effect (4). This gravity effect can be compared to the observed gravity effect (5).

GMSYS-3D is a module of the software Geosoft Oasis Montaj (Geosoft Inc., Canada). It is a 3D gravity and magnetic modelling package for surface-oriented models (Popowski et al 2006). A model is defined by a number of stacked surface grids with density-distributions specified for the layer below each surface. These surfaces are represented by Geosoft-compatible grids and are referred to as horizons, structure grids or surface grids. Calculations are performed in the wave number domain and are based on Dr. Bill Pearson's implementation of R. L. Parker's algorithm (1972).

The 3D model consists of density variation and geometry of at least sediment, top to basement, ICL, and Moho. The Moho can be calculated with the ASEP technique (Wienecke 2006, Wienecke et al 2007). An advanced Moho can be calculated with the ASEP+ technique (see WO2010/057783) including the load distribution (11). This is a step of providing information (11) relating to the geometry of the Moho for the region, the Moho representing a transition between the upper mantle and the lower crust for the region. The model can also contain more information for example salt geometry. The geometry can be constrained by a seismological model like the Crust 5.0, Crust 2.0 or similar, seismic key surfaces or other constraint from geological and geophysical observations.

A step is also performed to determine or provide the geometry of an intra-crustal layer or ICL (7) for the region, the ICL representing a transition between the lower crust and the middle or upper crust for the region,

A new isostatic ICL (8) is introduced that corresponds to the boundary of equilibrium where the loads (sediment, salt, granites etc.) are balanced within the lower crustal plate. The geometry of the intra-crustal layer can be determined from the geometry of the Moho. The isostatic ICL can be calculated as a predetermined fraction of the depth of the Moho, for example 2/3 of the depth value of the Flexure Moho achieved by ASEP+ application (or more generally between 0.57 and 0.77 of the depth of the Moho). This is represented by arrow (10).

A crustal horizon at 2/3 depth of the Moho is based on experiences from gravity and magnetic modelling. Often the horizon is acting as a helping horizon for the modelling, where the rock properties of the model can be adjusted. The depth approximately corresponds to the Curie temperature depth (about 600 degree Celsius) for continental crust, at which rocks lose their magnetic properties. Additionally, this layer approximately corresponds to the Conrad discontinuity. The Curie temperature depth and the Conrad discontinuity point towards a weak zone within the crust which partly coincides with the isostatic layer where the masses can be isostatically balanced. Other values around 2/3 might also suitable in certain applications, for example the value may be between 0.57 and 0.77.

Another possibility for calculating the isostatic ICL makes use of the knowledge that the ICL corresponds to a Paleo Moho in the case of serpentinized mantle. Then the isostatic ICL can be calculated from the Paleo topography or the depth to top basement with the ASEP+ application. Other techniques for calculating the isostatic ICL can be used.

Gravity inversion (6) (e.g. Parker algorithm) is used to obtain a lateral density distribution (12) between the ICL (7) and Moho (11). This is a step of using observed gravity data to determine a density distribution between the intra-crustal layer and the Moho. The determined density distribution can then be compared to a reference density distribution or reference value for the lower crust, the comparison enabling the identification of anomalous areas of the lower crust for the region, as will be explained further below.

Thereby the entire geometry of the crustal model is fixed (e.g. sediment, top to basement, ICL, Moho).

If the Moho (e.g., calculated with ASEP+) explains the long wave length part of the observed gravity signal then there is a normal crust type and inverted density corresponds to the normal reference earth model. If not, there is an anomalous crust type, and the missing masses are explained to be situated between ICL and Moho. The short wave length part of the gravity signal needs still to be explained with upper sources like sedimentary and salt density variations.

From the lateral density distribution, normalized density factors (NDF) can be calculated by dividing the gravity inverted density values by a reference density value. The NDFs can themselves also be considered to represent a density distribution (12). Normalising in this way is not essential, merely affecting the reference density distribution or reference density value to which the density distribution is later compared (e.g. 2900 to 3100 kg/m3 if not normalised, or a value of 1 if normalised).

The reference density value is preferably selected from a range between 2900 to 3100 kg/m3, depending on the reference background model and seismological ICL.

If the first seismological ICL is used, then this value can be for example 2900 kg/m3, corresponding to the average value of the lower crust of the reference earth model.

If the second seismological ICL is used, then the reference density value could be 3100 kg/m3 (or 3050 kg/m3).

The reference density value chosen will not change the position and location of the NDF > 1 domains significantly, only the size of the areas. The choice of the reference density value influence what is considered to be the normal crust type corresponding to NDF = 1. Therefore the value should generally not be higher than 3100 kg/m3.

A "normal" crust type would be expressed by NDF = 1. An area mapped with NDF < 1 indicates areas with anomalous lower density. Vice versa, NDF > 1 indicates areas with anomalous high density.

First and second different geometries for the intra-crustal layer can be used, with the density distribution being determined using some combination of the first and second geometries.

For example, the step of calculating the NDF can be divided into several steps to produce a combined NDF. With such a scheme, in a first step the NDF$^s$ is calculated between the seismic ICL (9) (first geometry) and the Moho (11), and in a second step NDF$^i$ is calculated between the isostatic ICL (8) (second geometry) and the Moho (11).

A final (or combined) NDF distribution is then calculated from the product of NDF$^s$ related to the seismic ICL (e.g. from Crust 2.0 model) and NDF' related to the isostatic ICL:

$$NDF = NDF^s \times NDF^i.$$

The final NDF distribution can then be used to identify anomalous areas of the crust. Calculation of a product in this way can be beneficial in order to compare both observations, one with ICL from seismic due to velocity contrast compared with a surface of isostatically balanced masses. With this method, first and second density distributions between the intra-crustal layer and the Moho are determined relating respectively to the first and second geometries for the intra-crustal layer, and the first and second density distributions are combined to form a combined density distribution. The combined density distribution can then be used to compare against the reference distribution or value. Determination of the seismic ICL (9) from the Crust 2.0 model is represented by arrow (13).

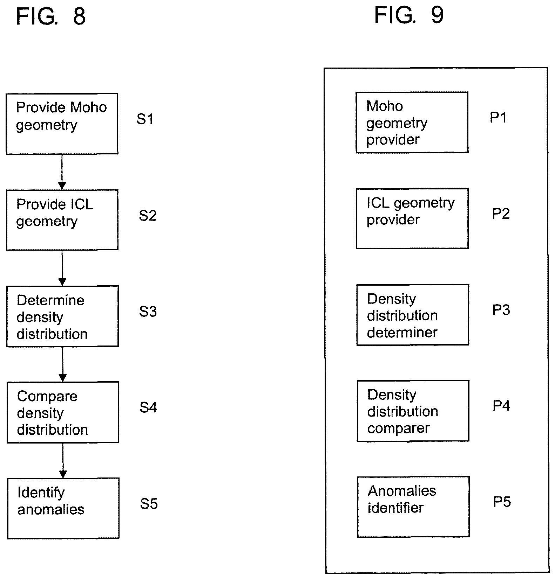

In summary, and referring to Figure 8, a method embodying the present invention comprises is for use in identifying anomalous areas of the lower crust of a region of the earth, and comprises determining and/or providing (S1) information relating to the geometry of the Moho for the region, the Moho representing a transition between the upper mantle and the lower crust for the region, determining and/or providing (S2) the geometry of an intra-crustal layer for the region, the intra-crustal layer representing a transition between the lower crust and the middle or upper crust for the region, using observed gravity data to determine (S3) a density distribution between the intra-crustal layer and the Moho, and comparing (S4) the determined density distribution to a reference density distribution or reference density value for the lower crust, the comparison enabling the identification (S5) of anomalous areas of the lower crust for the region.

Referring to Figure 9, an apparatus embodying the present invention is for use in identifying anomalous areas of the lower crust of a region of the earth, and comprises means (P1) for determining and/or providing information relating to the geometry of the Moho for the region, the Moho representing a transition between the upper mantle and the lower crust for the region, means (P2)_for determining and/or providing the geometry of an intra-crustal layer for the region, the intra-crustal layer representing a transition between the lower crust and the middle or upper crust for the region, means (P3) for using observed gravity data to determine a density distribution between the intra-crustal layer and the Moho, and means (P4) for comparing the determined density distribution to a reference density distribution or reference density value for the lower crust, the comparison enabling the identification of anomalous areas of the lower crust for the region by further means (P5).

We apply the ASEP+D method in the South Atlantic. We obtain that the NDF distribution emphasizes anomalies related to tectonic structures of the segmented passive margin.

The areas of positive NDF > 1 (black and dark grey colored areas Figure 4, and Figure 7 show a very good correlation with the tectonic settings of the sedimentary basins containing giant oil and gas fields.

It is useful to consider what aspects of the present invention might be considered as novel.

The method is able to map anomalous parts of the crust by normalized density factors NDF e.g., calculated from the product of $NDF^s$ related to the seismic ICL and NDF' related to the isostatic ICL.

The NDF = $NDF^s$ x $NDF^i$ distribution is able to identify anomalous areas of the crust, which correlates with the tectonic settings of sedimentary basins in the South Atlantic containing giant oil and gas fields.

This proposed method is not a simple further development of the ASEP method which would result from a logical consequence.

The ASEP method expresses the misfit of an observed Moho (from seismic gravity etc.) and a flexure Moho calculated with the ASEP by a change in the rigidity. The ASEP+E method includes the Young's modulus variation.

With an embodiment of the ASEP+D method it is only the calculation of the geometry of isostatic ICL and Moho that is based on the ASEP technique. It is not the misfit of the isostatic Moho to a reference Moho that is investigated, like it is done in the ASEP method and ASEP+E method. Constant Te values can be used, corresponding to an average value.

In contrast to previously considered methods, a gravity inversion of the observed gravity is performed to obtain density variation and not to obtain the depth/geometry of the boundary (like in the ASEP+E method for the gravity Moho).

It is novel to use a fixed geometry of Moho and ICL independent from the gravity field observation.

New objects are introduced like the isostatic intra-crustal layer and the normalized density distribution.

It is novel to calculate an isostatic ICL.

It is novel that a gravity inversion is used to determine a lateral density distribution between the ICL and the Moho.

It is novel to calculate a normalized density distribution of the lower crust using the ICL from seismology and the isostatic ICL.

That anomalous crust is expressed by or derived from normalized density factors (NDF) is also novel.

It is novel that mapped areas of NDF > 1 show a correlation to the tectonic setting of sedimentary basins containing giants (present day).

It is also worth considering how an embodiment of the present invention helps to address the problems discussed previously.

As explained previously, the existing technology for global screening and frontier exploration does not provide a common method that clearly allows describing the OCT and their segmentation which shows a correlation of the tectonic settings of the basins containing giants. With the ASEP+D method this can be achieved.

As explained previously, seismic observations in the past have suggested a boundary other than the Moho, which has been interpreted as such, but which would correspond to the intra-crustal layer (ICL). There has not been a consistent model of a Moho and lower crustal architecture explaining all observations from gravity, seismic and isostasy. With the ASEP+D method a model can be found that explains all observations and describes the transition between the lower crust and upper mantle (see Figure 2).

As clarified previously, up till now, the isostatic Moho model has been neglected and only the seismic Moho model has been considered. But this has led to incorrect tectonic and geological models concerning the temperature and beta stretching factures, subsidence history and so on. With the new technique, it can be detected if the seismic interpreted Moho is consistent with the ICL. By introducing an isostatic Moho, too shallow a Moho depth is avoided, and therefore misleading geological models are not derived (see Figure 1 and Figure 2).

As discussed previously, due to the inherent ambiguity of potential field modelling, there has been a problem to distinguish between a shallow and a deeper crustal source. The geometry change of the crust-mantle boundary in order to fit the gravity observation can be inconclusive and ambiguous. This problem has been reduced by calculating the Moho geometry from the load with the ASEP, which is independently from the gravity modelling. Then the long wavelength of the gravity field is explained with the Moho geometry. This reduces the degrees of freedom in the modelling.

With the ASEP+D method the misfit of the intermediate wave lengths of the gravity signal can be explained by masses situated in the lower crust and expressed by normalized density factors NDF < 1 or NDF > 1.

As mentioned previously, the passive margins have been described with two endmember types volcanic and magma poor margins. Both margin types have different implications on the hydrocarbon system. A problem with this technology is to establish a tectonic model distinguishing between volcanic and magma-poor margin type and showing a direct correlation to the tectonic settings of the basins containing giants. Also, the outcome of both passive margin models is a predicted lower crustal body of high density and it remains difficult to distinguish between them. Also, because seismic interpreted Moho differ from isostatic calculated Moho there is confusion as to whether the feature would belong to lower crust or upper mantle.

An embodiment of the present invention helps to overcome this problem, because instead of LCBs, the intra-crustal layer is considered in order to investigate the tectonic settings. An isostatic ICL is calculated and compared with the seismological obtained ICL. A fixed geometry of the isostatic Moho calculated with the ASEP is used. Anomalous densities D compared to the normal reference density (e.g. 2900 kg/m$^3$) of the lower crust are identified. A gravity inversion between the ICL and Moho is performed to obtain a density distribution.

The ASEP+D does not generally distinguish between both endmember passive margin types; it maps only anomalous areas of the lower crust showing a direct correlation to the tectonic settings of the basins containing giants.

Therefore potential issues are avoided because there are margin types possible which would correspond to a mixed type, or show different stadium during their evolution. There is still much discussion going on as to whether or not some segments of the passive margin belongs to a magma-poor or volcanic margin type (see Figure 3 Passive margin).

The world giant map (P. Mann et al 2006) shows the position of basins where known discoveries were made and produced fields are located. Figure 7 is a schematic illustration how the domains of NDF > 1 (black circle) correlate very well with the tectonic settings of sedimentary basins containing giant oil and gas fields (white crosses).

Previously, a link of the tectonic setting of these sedimentary basins with the geophysical observation was neither known, nor published. With the ASEP+D method such a link is established. Observation form seismology, gravity and isostasy are combined. This method allows mapping anomalous areas with similar tectonic settings. A direct correlation is shown with the areas mapped with NDF>1 and the tectonic setting of the basins where we have large Oil and Gas discoveries. This could be used to predict and screen for sedimentary basins which could have an indication containing giants. By plotting the domains of NDF > 1 (black circle) in Figure 7, it is possible to map other basins with similar tectonic setting like the sedimentary basins containing giant oil and gas fields (predicted areas).

An embodiment of the present invention has one or more of the following advantages:

- a new derived model of lower crustal architecture is used for further modelling beta stretching factors, subsidence history
- shows a segmentation of the passive margin system correlation with tectonic setting of basins which contain large hydrocarbon fields
- possible use of a global screening and frontier exploration tool in areas with limited seismic access for basin ranking
- more environmental friendly method compared to seismic acquisition; it could be used for example in the Lofoten area and in the Circum Arctic region
- as a frontier exploration tool it is a very cost effective method, with all input data world wide available, some of free access (like Crust 2.0 model); this leads to a lower cost compared to seismic acquisition campaigns
- can be used as advanced planning tool for seismic acquisition campaigns, such as in decision making relating to which areas seismic should be acquired or bought, and allowing attention to be limited to prioritized areas. The area which needs to be covered is potentially much smaller as a result, and cost is reduced as a result.

It will be appreciated that a method and apparatus according to an embodiment of the present invention can be implemented in the form of one or more processors or processing units, which processing unit or units could be controlled or provided at least in part by a program operating on the device or apparatus. The function of several components illustrated in the drawings may in fact be performed by a single component. A single processor or processing unit may be arranged to perform the function of multiple components. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims.

**References**

Popowski, T., Connard, G. and French, R., 2006. GMSYS-3D: 3D Gravity and Magnetic Modeling for OasisMontaj-User Guide. Northwest Geophysical Associates, Corvallis, Oregon.

Parker, R.L. [1972] The rapid calculation of potential anomalies. Journal of the Royal Astronomical Society 31, 447-455.

Bassin, C., Laske, G. and Masters, G., The Current Limits of Resolution for Surface Wave Tomography in North America, EOS Trans AGU, 81, F897, 2000.

Martinez-Martinez, J. M., Soto, J. I. and Balanya, J. C. 1998 Crustal decoupling and intracrustal flow beneath domal exhumed core complexes, Betics (SE Spain) Terra Nova Volume 9 Issue 5-6, Pages 223 -227 doi: 10.1111/j.1365-3121.1997.tb00017.x,

Mann, P., Horn, M., and Cross, I., 2006, Tectonic Setting of 31 Giant Oil and Gas Fields Discovered from 2000-2005: Implications for Future Discovery Trends, AAPG, Houston, Texas, April 9-12. internet source: http://www.ig.utexas.edu/research/projects/giant_fields/#publications

Giant map available on the Web site of the Jackson School of Geosciences (http://www.ig.utexas.edu/research/projects/giant fields/.)

Meissner, R., 1973 "The 'Moho' as a transition zone", Surveys in Geophysics, Vol 1, no 2 pp 195-216, Springer Netherland, ISSN 0169-3298 (Print) 1573-0956 (Online) doi: 10.1007/BF01449763

CRUST 2.0 model: http://igppweb.ucsd.edu/~gabi/crust2.html

Wienecke, S. 2006 "A new analytical solution for the calculation of flexural rigidity: its significance and application", Doctor Thesis, Free University of Berlin, Berlin, Germany http://www.diss.fu-berlin.de/diss/receive/FUDISS thesis 000000001984

Wienecke, S. Braitenberg, C. and Götze, H. J., 2007 "A new analytical solution estimating the flexural rigidity in the Central Andes", Geophysical Journal International, Vol 169; no 3, pp 789-794 doi: 10.1111/j.1365-246X.2007.3396.x

Wienecke, S., 2009 "ASEP+E Method of gaining first order information about crustal architecture", subject of British Patent Application No. 0821048.6 in the name of Statoil ASA (subsequently filed as a PCT application and published as WO2010/057783)

**Claims**

1. A computer-implemented method for use in identifying anomalous areas of the lower crust of a region of the earth, comprising providing (S1) information relating to the geometry of the Moho for the region, the Moho representing a transition between the upper mantle and the lower crust for the region,
**characterised by the steps of**
determining (S2) the geometry of an intra-crustal layer for the region, the intra-crustal layer representing a transition between the lower crust and the middle or upper crust for the region, using (S3) observed gravity data to determine a density distribution between the intra-crustal layer and the Moho, and comparing (S4) the determined density distribution to a reference density distribution or reference density value for the lower crust, the comparison enabling the identification (S5) of anomalous areas of the lower crust for the region.

2. A method as claimed in claim 1, comprising determining the geometry of the intra-crustal layer from the geometry of the Moho.

3. A method as claimed in claim 2, comprising determining the depth of the intra-crustal layer based on the depth of the Moho, for example as a predetermined fraction of the depth of the Moho.

4. A method as claimed in claim 3, comprising determining the depth of the intra-crustal layer as being between 0.57 and 0.77 of the depth of the Moho, for example two thirds of the depth of the Moho.

5. A method as claimed in any preceding claim, comprising determining first and second geometries for the intra-crustal layer, and determining the density distribution using the first and second geometries for the intra-crustal layer.

6. A method as claimed in claim 5, comprising determining first and second density distributions between the intra-crustal layer and the Moho relating respectively to the first and second geometries for the intra-crustal layer, combining the first and second density distributions to form a combined density distribution, and using the combined density distribution in the comparing step.

7. A method as claimed in any preceding claim, comprising determining the geometry of the Moho using a method as disclosed and claimed in WO2010/057783.

8. A method as claimed in any preceding claim, wherein the step of using (S3) the observed gravity data to determine the density distribution comprises performing a gravity inversion.

9. A method as claimed in any preceding claim, wherein the reference density distribution or reference density value for the lower crust is obtained from a reference earth model.

10. A method as claimed in claim 9, wherein the comparing step (S4) comprises comparing the determined density distribution to an average density value for the lower crust obtained from the reference earth model.

11. A method as claimed in claim 10, wherein the step of comparing (S4) the determined density distribution to the average density value comprises dividing the determined density distribution by the average density value to obtain a normalised density distribution, and comparing the normalised density distribution with a reference density value of 1.

12. A method as claimed in any preceding claim, comprising identifying an area of the lower crust as anomalous if the determined density distribution is greater than the reference density distribution or reference density value for the lower crust, or at least greater than a threshold which is itself higher than the reference density distribution or reference density value.

13. A method as claimed in any preceding claim, comprising determining a degree of anomalousness based on the determined density distribution, for example based on the comparison between the determined density distribution and the reference density distribution or reference density value.

14. A method of assessing the likelihood of or potential for oil and/or gas fields, particularly giant oil and/or gas fields, in a region of the earth, comprising performing a method according to any preceding claim, or at least using the result of a method according to any preceding claim, for example using the determined density distribution or the output of the comparing step or the determined degree of anomalousness according to claim 13.

15. A method of performing oil and/or gas field operations as a result of the performance of a method according to any preceding claim.

16. A method of identifying anomalous areas of the lower crust of a region of the earth, comprising receiving a density distribution determined according to a method as claimed in any preceding claim, comparing the received density distribution to a reference density distribution or reference density value for the lower crust, and identifying anomalous areas of the lower crust for the region based on the comparison.

17. A method for use in identifying anomalous areas of the lower crust of a region of the earth, comprising performing those steps of any preceding claim required to determine a density distribution, the density distribution being for subsequent comparison with a reference density distribution or reference density value for the lower crust, such that anomalous areas of the lower crust for the region can be identified based on the comparison.

18. An apparatus comprising means configured to perform a method according to any preceding claim.

19. A program comprising instructions which, when the program is executed by a computer, cause the computer to carry out the method as claimed in any one of claims 1 to 16.

20. A storage medium containing a program as claimed in claim 19.

**EP 2 791 713 B1**

**Patentansprüche**

1. Computerimplementiertes Verfahren zur Verwendung beim Identifizieren anormaler Bereiche der unteren Kruste einer Region der Erde, umfassend das Bereitstellen (S1) von Informationen im Zusammenhang zu der Geometrie der Moho für die Region, wobei die Moho einen Übergang zwischen dem oberen Mantel und der unteren Kruste für die Region repräsentiert, **gekennzeichnet durch** die folgenden Schritte
ein Bestimmen (S2) der Geometrie einer intrakrusten Schicht für die Region, wobei die intrakrusten Schicht einen Übergang zwischen der unteren Kruste und der mittleren oder oberen Kruste für die Region repräsentiert, ein Verwenden (S3) von beobachteten Gravitationsdaten, um eine Dichteverteilung zwischen der intrakrusten Schicht und der Moho zu bestimmen und ein Vergleichen (S4) der bestimmten Dichteverteilung mit einer Referenz-Dichteverteilung oder einem Referenz-Dichtewert für die untere Kruste, wobei der Vergleich die Identifizierung (S5) der anomalen Bereiche für die untere Kruste der Region ermöglicht.

2. Verfahren nach Anspruch 1, umfassend ein Bestimmen der Geometrie der intrakrusten Schicht der Geometrie der Moho.

3. Verfahren nach Anspruch 2, umfassend ein Bestimmen der Tiefe der intrakrusten Schicht basierend auf der Tiefe der Moho, zum Beispiel, als eine vorbestimmte Fraktion der Tiefe der Moho.

4. Verfahren nach Anspruch 3, umfassend ein Bestimmen der Tiefe der intrakrusten Schicht als zwischen 0,57 und 0,77 der Tiefe der Moho, zum Beispiel, zwei Drittel der Tiefe der Moho.

5. Verfahren nach einem der vorstehenden Ansprüche, umfassend ein Bestimmen einer ersten und zweiten Geometrie für die intrakruste Schicht und ein Bestimmen der Dichteverteilung unter Verwendung der ersten und zweiten Geometrie für die intrakruste Schicht.

6. Verfahren nach Anspruch 5, umfassend ein Bestimmen einer ersten und zweiten Dichteverteilung zwischen der intrakrusten Schicht und der Moho in Zusammenhang mit jeweils der ersten und der zweiten Geometrie für die intrakruste Schicht, ein Kombinieren der ersten und zweiten Dichteverteilung, um eine kombinierte Dichteverteilung zu bilden und ein Verwenden der kombinierten Dichteverteilung in dem Vergleichsschritt.

7. Verfahren nach einem der vorstehenden Ansprüche, umfassend ein Bestimmen der Geometrie der Moho unter Verwendung eines Verfahrens wie in WO2010/057783 beschrieben und beansprucht.

8. Verfahren nach einem der vorstehenden Ansprüche, wobei der Schritt eines Verwendens (S3) der beobachteten Gravitationsdaten, um die Dichteverteilung zu bestimmen, ein Durchführen eines Gravitationswechsels umfasst.

9. Verfahren nach einem der vorstehenden Ansprüche, wobei die Referenz-Dichteverteilung oder der Referenz-Dichtewert für die untere Kruste aus einem Referenz-Erdmodell gewonnen wird.

10. Verfahren nach Anspruch 9, wobei der Vergleichsschritt (S4) ein Vergleichen der bestimmten Dichteverteilung zu einem mittleren Dichtewert für die untere Kruste umfasst, der aus dem Referenz-Erdmodell gewonnen wird.

11. Verfahren nach Anspruch 10, wobei der Schritt eines Vergleichens (S4) der bestimmten Dichteverteilung zu einem mittleren Dichtewert, ein Teilen der bestimmten Dichteverteilung nach dem mittleren Dichtewert umfasst, um eine normalisierten Dichteverteilung zu gewinnen und ein Vergleichen der normalisierten Dichteverteilung mit einem Referenz-Dichtewert von 1.

12. Verfahren nach einem der vorstehenden Ansprüche, umfassend ein Identifizieren eines Bereichs der unteren Kruste als anormal, wenn die bestimmte Dichteverteilung größer als die Referenz-Dichteverteilung oder der Referenz-Dichtewert für die untere Kruste ist oder mindestens größer als ein Grenzwert ist, der selber höher als die Referenz-Dichteverteilung oder der Referenz-Dichtewert ist.

13. Verfahren nach einem der vorstehenden Ansprüche, umfassend ein Bestimmen eines Abnormitätsgrads basierend auf der bestimmten Dichteverteilung, zum Beispiel, basierend auf dem Vergleich zwischen der bestimmten Dichteverteilung und der Referenz-Dichteverteilung oder dem Referenz-Dichtewert.

14. Verfahren zum Beurteilen der Wahrscheinlichkeit oder des Potentials für Öl- und/oder Gasfelder, besonders Riesenöl- und/oder Riesengasfelder, in einer Region der Erde, umfassend ein Ausführen eines Verfahrens nach einem der vorstehenden Ansprüche oder mindestens ein Verwenden des Ergebnisses eines Verfahrens nach einem der vorstehenden Ansprüche, zum Beispiel, ein Verwenden der bestimmten Dichteverteilung oder des Ergebnisses des Vergleichsschritts oder des bestimmten Abnormitätsgrads nach Anspruch 13.

15. Verfahren eines Durchführens von Öl- und/oder Gasfeldoperationen als ein Ergebnis des Durchführens eines Verfahrens nach einem der vorstehenden Ansprüche.

16. Verfahren für ein Identifizieren anormaler Bereiche der unteren Kruste einer Region der Erde, umfassend ein Erhalten einer Dichteverteilung, die nach einem Verfahren nach einem der vorstehenden Ansprüche bestimmt wird, ein Vergleichen der erhaltenen Dichteverteilung mit einer Referenz-Dichteverteilung oder einem Referenz-Dichtewert für die untere Kruste und ein Identifizieren von anormalen Bereichen der unteren Kruste für die Region basierend auf dem Vergleich.

17. Verfahren zur Verwendung bei dem Identifizieren anormaler Bereiche der unteren Kruste einer Region der Erde, umfassend ein Durchführen der Schritte nach einem der vorstehenden Ansprüche, die erforderlich sind, um eine Dichteverteilung zu bestimmen, wobei die Dichteverteilung für einen späteren Vergleich mit einer Referenz-Dichteverteilung oder einem Referenz-Dichtewert für die untere Kruste ist, sodass anormale Bereiche der unteren Kruste der Region basierend auf dem Vergleich identifiziert werden können.

18. Vorrichtung, die Mittel umfasst, die konfiguriert sind, ein Verfahren nach einem der vorstehenden Ansprüche auszuführen.

19. Programm, das Anweisungen umfasst, die, wenn das Programm durch einen Computer ausgeführt wird, den Computer veranlassen, ein Verfahren nach einem der Ansprüche 1 bis 16 auszuführen.

20. Speichermedium, das ein Programm nach Anspruch 19 enthält.

## Revendications

1. Procédé mis en oeuvre par ordinateur et destiné à être utilisé pour l'identification de zones anormales de la croûte inférieure d'une région de la terre, comprenant la fourniture (S1) d'informations relatives à la géométrie du Moho pour la région, le Moho représentant une transition entre le manteau supérieur et la croûte inférieure pour la région, **caractérisé par** les étapes de
détermination (S2) de la géométrie d'une couche intracrustale pour la région, la couche intracrustale représentant une transition entre la croûte inférieure et la couche intermédiaire ou supérieure pour la région, l'utilisation (S3) de données gravimétriques observées pour déterminer une distribution de densité entre la couche intracrustale et le Moho, et la comparaison (S4) de la distribution de densité déterminée à une distribution de densité de référence ou à une valeur de densité de référence pour la croûte inférieure, la comparaison permettant l'identification (S5) de zones anormales de la croûte inférieure pour la région.

2. Procédé selon la revendication 1, comprenant la détermination de la géométrie de la couche intracrustale à partir de la géométrie du Moho.

3. Procédé selon la revendication 2, comprenant la détermination de la profondeur de la couche intracrustale en fonction de la profondeur du Moho, par exemple comme une fraction prédéterminée de la profondeur du Moho.

4. Procédé selon la revendication 3, comprenant la détermination de la profondeur de la couche intracrustale comme représentant entre 0,57 et 0,77 fois la profondeur du Moho, par exemple deux tiers de la profondeur du Moho.

5. Procédé selon l'une quelconque des revendications précédentes, comprenant la détermination de première et seconde géométries pour la couche intracrustale, et la détermination de la distribution de densité au moyen des première et seconde géométries pour la couche intracrustale.

6. Procédé selon la revendication 5, comprenant la détermination de première et seconde distributions de densité entre la couche intracrustale le Moho concernant respectivement les première et seconde géométries pour la couche intracrustale, la combinaison des première et seconde distributions de densité pour former une distribution de densité combinée, et l'utilisation de la distribution de densité combinée dans l'étape de comparaison.

7. Procédé selon l'une quelconque des revendications précédentes, comprenant la détermination de la géométrie du Moho au moyen d'un procédé tel que décrit et revendiqué dans WO2010/057783.

8. Procédé selon l'une quelconque des revendications précédentes, dans lequel l'étape d'utilisation (S3) des données gravimétriques observées pour déterminer la distribution de densité comprend la réalisation d'une inversion gravimétrique.

9. Procédé selon l'une quelconque des revendications précédentes, dans lequel la distribution de densité de référence ou la valeur de densité de référence pour la croûte inférieure est obtenue à partir d'un modèle terrestre de référence.

10. Procédé selon la revendication 9, dans lequel l'étape de comparaison (S4) comprend la comparaison de la distribution de densité déterminée à une valeur de densité moyenne pour la croûte inférieure obtenue à partir du modèle terrestre de référence.

11. Procédé selon la revendication 10, dans lequel l'étape de comparaison (S4) de la distribution de densité déterminée à la valeur de densité moyenne comprend la division de la distribution de densité déterminée par la valeur de densité moyenne pour obtenir une distribution de densité normalisée, et la comparaison de la distribution de densité normalisée avec une valeur de densité de référence de 1.

12. Procédé selon l'une quelconque des revendications précédentes, comprenant l'identification d'une zone de la croûte inférieure comme anormale si la distribution de densité déterminée est supérieure à la distribution de densité de référence ou à la valeur de densité de référence pour la croûte inférieure, ou au moins supérieure à un seuil qui est lui-même supérieur à la distribution de densité de référence ou à la valeur de densité de référence.

13. Procédé selon l'une quelconque des revendications précédentes, comprenant la détermination d'un degré d'anomalie sur la base de la distribution de densité déterminée, par exemple sur la base de la comparaison entre la distribution de densité déterminée et la distribution de densité de référence ou la valeur de densité de référence.

14. Procédé d'évaluation de la probabilité ou de de la possibilité d'existence de gisements de pétrole et/ou de gaz, en particulier de gisements géants de pétrole et/ou de gaz, dans une région de la terre, comprenant la réalisation d'un procédé selon l'une quelconque des revendications précédentes, ou au moins l'utilisation du résultat d'un procédé selon l'une quelconque des revendications précédentes, par exemple l'utilisation de la distribution de densité déterminée ou le résultat de l'étape de comparaison ou le degré d'anomalie déterminé selon la revendication 13.

15. Procédé de réalisation de l'exploitation d'un gisement de pétrole et/ou de gaz par suite de la réalisation d'un procédé selon l'une quelconque des revendications précédentes.

16. Procédé d'identification de zones anormales de la croûte inférieure d'une région de la terre, comprenant la réception d'une distribution de densité déterminée selon un procédé selon l'une quelconque des revendications précédentes, la comparaison de la distribution de densité reçue à une distribution de densité de référence ou à une valeur de densité de référence pour la croûte inférieure, et l'identification de zones anormales de la croûte inférieure pour la région sur la base de la comparaison.

17. Procédé destiné à être utilisé pour l'identification de zones anormales de la croûte inférieure d'une région de la terre, comprenant la réalisation des étapes de l'une quelconque des revendications précédentes nécessaires pour déterminer une distribution de densité, la distribution de densité étant destinée à une comparaison ultérieure avec une distribution de densité de référence ou une valeur de densité de référence pour la croûte inférieure, de sorte que des zones anormales de la croûte inférieure pour la région peuvent être identifiées sur la base de la comparaison.

18. Appareil comprenant des moyens configurés pour réaliser un procédé selon l'une quelconque des revendications précédentes.

19. Programme comprenant des instructions qui, lorsque le programme est exécuté par un ordinateur, amènent l'ordinateur à effectuer le procédé selon l'une quelconque des revendications 1 à 16.

20. Support de stockage contenant un programme selon la revendication 19.

FIG. 1

FIG. 2

FIG. 3

FIG. 4

FIG. 5

FIG. 6

FIG. 7

FIG. 8

```
┌─────────────────┐
│ Provide Moho    │  S1
│ geometry        │
└─────────────────┘
         │
         ▼
┌─────────────────┐
│ Provide ICL     │  S2
│ geometry        │
└─────────────────┘
         │
         ▼
┌─────────────────┐
│ Determine       │
│ density         │  S3
│ distribution    │
└─────────────────┘
         │
         ▼
┌─────────────────┐
│ Compare         │
│ density         │  S4
│ distribution    │
└─────────────────┘
         │
         ▼
┌─────────────────┐
│ Identify        │  S5
│ anomalies       │
└─────────────────┘
```

FIG. 9

```
┌───────────────────────────────┐
│  ┌──────────────┐             │
│  │ Moho         │             │
│  │ geometry     │   P1        │
│  │ provider     │             │
│  └──────────────┘             │
│                               │
│  ┌──────────────┐             │
│  │ ICL geometry │             │
│  │ provider     │   P2        │
│  └──────────────┘             │
│                               │
│  ┌──────────────┐             │
│  │ Density      │             │
│  │ distribution │   P3        │
│  │ determiner   │             │
│  └──────────────┘             │
│                               │
│  ┌──────────────┐             │
│  │ Density      │             │
│  │ distribution │   P4        │
│  │ comparer     │             │
│  └──────────────┘             │
│                               │
│  ┌──────────────┐             │
│  │ Anomalies    │   P5        │
│  │ identifier   │             │
│  └──────────────┘             │
└───────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010057783 A
- GB 0821048 A

### Non-patent literature cited in the description

- **POPOWSKI, T. ; CONNARD, G ; FRENCH, R.** GM-SYS-3D: 3D Gravity and Magnetic Modeling for Oasis-Montaj- User Guide. *Northwest Geophysical Associates, Corvallis, Oregon,* 2006
- **PARKER, R.L.** The rapid calculation of potential anomalies. *Journal of the Royal Astronomical Society,* 1972, vol. 31, 447-455
- **BASSIN, C. ; LASKE, G ; MASTERS, G.** The Current Limits of Resolution for Surface Wave Tomography in North America. *EOS Trans AGU,* 2000, vol. 81, F897
- **MARTINEZ-MARTINEZ, J. M. ; SOTO, J. I. ; BALANYA, J. C.** Crustal decoupling and intracrustal flow beneath domal exhumed core complexes. *Betics (SE Spain) Terra Nova,* 1998, vol. 9 (5-6), 223-227
- **MANN, P. ; HORN, M. ; CROSS, I.** Tectonic Setting of 31 Giant Oil and Gas Fields. *Implications for Future Discovery Trends, AAPG,* 2006
- The 'Moho' as a transition zone. **MEISSNER, R.** Surveys in Geophysics. Springer Netherland, 1973, vol. 1, 195-216
- **WIENECKE, S.** A new analytical solution for the calculation of flexural rigidity: its significance and application. *Doctor Thesis, Free University of Berlin,* 2006, http://www.diss.fu-berlin.de/diss/receive/FUDISS thesis 000000001984
- **WIENECKE, S. ; BRAITENBERG, C. ; GÖTZE, H. J.** A new analytical solution estimating the flexural rigidity in the Central Andes. *Geophysical Journal International,* 2007, vol. 169 (3), 789-794